# EUROPÄISCHE PATENTSCHRIFT

(11) **EP 2 122 419 B1**
(45) Veröffentlichungstag und Bekanntmachung des Hinweises auf die Patenterteilung: **29.07.2015**
(21) Anmeldenummer: 08706887.0
(22) Anmeldetag: 14.02.2008
(51) Int. Cl.: G03H 1/02, C03C 17/00, C04B 41/45, C04B 41/81, B44C 1/17, B44B 5/00, B44C 1/18, B44C 3/02

(54) **VERFAHREN ZUM ÜBERTRAGEN VON OBERFLÄCHENSTRUKTURIERUNGEN, WIE INTERFERENZSCHICHTEN, HOLOGRAMMEN UND ANDEREN HOCHBRECHENDEN OPTISCHEN MIKROSTRUKTUREN**
METHOD FOR TRANSFERRING SURFACE STRUCTURES SUCH AS INTERFERENCE LAYERS, HOLOGRAMS, AND OTHER HIGHLY REFRACTIVE OPTICAL MICROSTRUCTURES
PROCÉDÉ DE TRANSFERT DE STRUCTURES DE SURFACE, TELLES QUE DES COUCHES D'INTERFÉRENCES, DES HOLOGRAMMES ET D'AUTRES MICROSCTRUCTURES OPTIQUES HAUTEMENT RÉFRACTIVES

(30) Priorität: 15.02.2007 DE 102007008073; 25.04.2007 DE 102007019866
(43) Veröffentlichungstag der Anmeldung: 25.11.2009
(73) Patentinhaber: Leibniz-Institut für Neue Materialien gemeinnützige GmbH, 66123 Saarbrücken (DE)
(72) Erfinder: OLIVEIRA, Peter William, Dr., 66111 Saarbrücken (DE); SCHAEFER, Bruno, 66679 Losheim am See (DE); FALLER-SCHNEIDER, Christine, 66333 Völklingen (DE); VEITH, Michael, Dr., 66386 St. Ingbert (DE)
(74) Vertreter: Vièl, Christof
(86) Internationale Anmeldenummer: PCT/DE2008/000273
(87) Internationale Veröffentlichungsnummer: WO 2008/098567

(56) Entgegenhaltungen:
- EP-A- 1 614 664
- EP-A- 1 632 362
- WO-A-93/16888
- WO-A-98/22648
- WO-A-02/097537
- DE-A1- 4 130 550
- DE-A1- 4 417 405
- DE-A1- 19 633 675
- JP-A- 2003 280 498
- US-A1- 2004 144 479

## Beschreibung

Die Erfindung betrifft ein Verfahren zum Übertragen von Oberflächensirukturierungen, wie Interferenzschichten, Hologrammen und anderen hochbrechenden optischen Mikrostrukturen auf Substrate.

Als Substrate kommen hierbei insbesondere Glas-, Keramik- und Metalloberflächen in Frage.

Die Verwendung von Transferfolien zum Übertragen von Dekoren auf diverse Untergründe, wobei auch ein Einbrennen des Dekors über oder unter einer Glasur erfolgen kann, ist beispielsweise aus der US 6,766,734, der US 6,694,885 und der US 6,854,386 bekannt.

Auch das Aufbringen von Hologrammklebefolien auf Papier- oder Kunststoffuntergründe ist weit verbreitet, wie beispielsweise aus der US 5,702,805 und der US 5,318,816 ersichtlich ist.

Aus der KR 2002/024286 A ist ein Hologrammübertragungsfilm und ein Herstellungsverfahren hierfür bekannt, der jedoch nicht für Glas- oder Keramikoberflächen geeignet ist. In der JP 2004/358925 A wird eine Hologrammklebefolie beschrieben, die jedoch nicht einbrennbar ist. Auch die in der JP 2003/280498 A beschriebene ein Hologramm tragende Übertragungsfolie ist nicht für Glas- oder Keramikoberflächen geeignet, was auch der Fall ist bei dem Gegenstand der US 5,702,805 A. Aus der EP 1632362 und der WO 93/16888 sind Verfahren zum Übertragen von Oberflächenstrukturierungen wie Hologramme bekannt.

Aus der WO 98/22648 A2 ist ein Verbundwerkstoff bekannt, der gekennzeichnet ist durch ein Substrat und ein damit in funktionellem Kontakt stehendes Nanokomposit, das erhältlich ist durch Oberflächenmodifizierung von
a) kolloidalen anorganischen Partikeln mit
b) einem oder mehreren Silanen der allgemeinen Formel

   Rₓ-Si-A₄₋ₓ

   worin die Reste A gleich oder verschieden sind und Hydroxylgruppen oder hydrolytisch abspaltbare Gruppen darstellen, ausgenommen Methoxy, die Reste R gleich oder verschieden sind und hydrolytisch nicht abspaltbare Gruppen darstellen und x den Wert 0, 1, 2 oder 3 hat, wobei bei mindestens 50 Stoffmengen-% der Silane x ≥ 1 ist;
   unter den Bedingungen des Sol-Gel-Prozesses mit einer unterstöchiometrischen Wassermenge, bezogen auf die vorhandenen hydrolysierbaren Gruppen, unter Bildung eines Nanokomposit-Sols, gegebenenfalls weitere Hydrolyse und Kondensation des Nanokomposit-Sols vor dem Inkontaktbringen mit dem Substrat und anschließende Härtung, wobei das Substrat keine Glas- oder Mineralfaser ist und kein Pflanzenmaterial ist.

Aufgabe der Erfindung ist es somit, ein Verfahren zum Übertragen von Interferenzschichten, Hologrammen und anderen hochbrechenden optischen Mikrostrukturen auf Substrate zu schaffen, das auch im Hochtemperaturbereich einsetzbar ist.

Diese Aufgabe wird erfindungsgemäß durch ein Verfahren zum Übertragen von Oberflächenstrukturierungen, wie Interferenzschichten, Hologrammen und anderen hochbrechenden optischen Mikrostrukturen auf ein Substrat, gelöst, das folgende Verfahrensschritte aufweist:
a) auf einer Trägerfolie, wird eine flexible Trägerzwischenschicht als Release- Schicht aufgebracht,
b) auf dieser Trägerzwischenschicht wird ein Prägesol appliziert und mit einer Oberflächenstrukturierung versehen,
c) Herstellen eines Stapels, bestehend aus einer Bindemittelschicht und der Oberflächenstrukturierung, wobei das Bindemittel direkt auf die Öberflächenstrukturierung appliziert und anschließend dieser Stapel auf das Substrat übertragen wird,
   wobei das Bindemittel aus einem Nanokomposit besteht, das erhältlich ist durch Oberflächenmodifizierung von
   i) kolloidalen anorganischen Partikeln mit
   ii) einem oder mehreren Silanen der allgemeinen Formel Rₓ-Si-A₄₋ₓ worin die Reste A gleich oder verschieden sind und Hydroxylgruppen oder hydrolytisch abspaltbare Gruppen darstellen, ausgenommen Methoxy, die Reste R gleich oder verschieden sind und hydrolytisch nicht abspaltbare Gruppen darstellen und x den Wert 0, 1, 2 oder 3 hat, wobei bei mindestens 50 Stoffmengen-% der Silane x ≥ 1 ist; unter den Bedingungen des Sol-Gel-Prozesses mit einer unterstöchiometrischen Wassermenge, bezogen auf die vorhandenen hydrolysierbaren Gruppen, unter Bildung eines Nanokomposit-Sols, gegebenenfalls weitere Hydrolyse und Kondensation des Nanokomposit-Sols.
d) Entfernen der Trägerfolie,
e) thermische Behandlung des Stapels.

Bei einer bevorzugten Ausführungsform dieses Verfahrens erfolgt in Schritt e) die thermische Behandlung bei Temperaturen bis 800°C, vorzugsweise bei Temperaturen bis 450°C. Es wird somit auf einer Trägerfolie eine flexible Trägerzwischenschicht als Release-Schicht aufgebracht.

Auf dieser Trägerzwischenschicht wird das Prägesol, das eine hinreichende Brechungsindexdifferenz zum Kleber aufweisen sollte, appliziert und mit einer Oberflächenstrukturierung, z.B. einem Hologramm oder einer anderen optischen Mikrostruktur versehen.

Anschließend wird ein Stapel aus einer Bindemittelschicht und der Oberflächenstrukturierung gebildet.

Dann wird die Trägerfolie entfernt.

Die erfindungsgemäße Aufgabe wird ebenfalls durch ein Verfahren zum Übertragen von Oberflächenstrukturierungen, wie Interferenzschichten, Hologrammen und anderen hochbrechenden optischen Mikrostrukturen auf ein Substrat, gelöst, das folgende Verfahrensschritte aufweist:
a) eine selbsttragende prägbare Folie wird mit einer Oberflächenstrukturierung versehen
b) Herstellen eines Stapels, bestehend aus einer Bindemittelschicht und der Oberflächenstrukturierung, wobei das Bindemittel direkt auf die Oberflächenstrukturierung appliziert und anschließend dieser Stapel auf das Substrat übertragen wird,
   wobei das Bindemittel aus einem Nanokomposit besteht, das erhältlich ist durch Oberflächenmodifizierung von
   i) kolloidalen anorganischen Partikeln mit
   ii) einem oder mehreren Silanen der allgemeinen Formel Rₓ-Si-A₄₋ₓ worin die Reste A gleich oder verschieden sind und Hydroxylgruppen oder hydrolytisch abspaltbare Gruppen darstellen, ausgenommen Methoxy, die Reste R gleich oder verschieden sind und hydrolytisch nicht abspaltbare Gruppen darstellen und x den Wert 0, 1, 2 oder 3 hat, wobei bei mindestens 50 Stoffmengen-% der Silane x ≥ 1 ist;
   unter den Bedingungen des Sol-Gel-Prozesses mit einer unterstöchiometrischen Wassermenge, bezogen auf die vorhandenen hydrolysierbaren Gruppen, unter Bildung eines Nanokomposit-Sols, gegebenenfalls weitere Hydrolyse und Kondensation des Nanokomposit-Sols,
c) thermische Behandlung des Stapels.

Bei dieser Variante der Erfindung wird statt der Trägerfolie mit der flexiblen Trägerzwischenschicht direkt eine selbsttragende flexible, prägbare Folie verwendet. Hierbei wird diese mit einer Oberflächenstrukturierung versehen und mit einer hochbrechenden Beschichtung bedeckt. Hierbei kann der Prägevorgang aber auch nach dem Applizieren der hochbrechenden Schicht direkt auf dieser erfolgen.

Schließlich wird das Werkstück thermisch behandelt, so daß am Ende auf der Substratoberfläche nur die strukturierte hochbrechende Schicht mittels der Bindemittelschicht anhaftet.

Mit einer solchen Transferfolie können eine Interferenzschicht, ein Hologramm oder eine andere optische Mikrostruktur auf ein Substrat übertragen werden, wobei die transferierten Schichten beim Transferprozeß erhalten bleiben, so daß ein nachträglicher Trocknungsprozeß und eine Ofenbehandlung im Hochtemperaturbereich möglich sind.

Die Vorteile der Erfindung bestehen im wesentlichen darin, daß eine hochtemperaturstabile Transferfolie geschaffen wird, die auf heißen Werkstoffen oder solchen Werkstoffen, die nachträglich erhitzt werden, aufbringbar und dauerbeständig ist. Dies bedeutet auch, daß die hierdurch aufgebrachten Interferenzschichten, Hologramme und anderen optischen Mikrostrukturen auch nicht nachträglich durch thermische Behandlung entfernt oder beschädigt werden können. Die Transferfolie kann zudem auf einer Folienbeschichtungsanlage mit angekoppelter Prägestation in Form von Folienrollen hergestellt werden und eignet sich dadurch zur Massenproduktion.

Somit wird es beispielsweise möglich, auch auf noch heiße Substrate ein Hologramm zu übertragen oder aber ein Hologramm auf ein Substrat zu übertragen, das während des Gebrauchs bis in den Hochtemperaturbereich erhitzt wird, z.B. einen Motorblock oder einen Fahrzeugkatalysator. Dies eröffnet neue Möglichkeiten, auch solche Teile mit Sicherheitsmerkmal, beispielsweise einem prüfbaren Hologramm, zu versehen, um Fälschungssicherheit zu gewährleisten.

Das optische Wirkprinzip der Erfindung beruht auf einem hinreichenden Brechungsindexunterschied zwischen der optischen Mikrostruktur und der Bindemittelschicht. Dieser Aspekt ermöglicht eine besondere Variabilität, da das Hologramm bzw. die optische Schicht in Kombination mit dem Bindemittel zur Steuerung der optischen Effekte herangezogen werden kann. So sind beispielsweise hochtemperaturstabile Schichtpakete herstellbar, die insgesamt wie eine Reflexions- oder Antireflexschicht, bzw. wie ein Hologramm wirken. Hierbei kann beispielsweise nur die Oberfläche des Reliefhologramms (oder der optischen Schicht) mit einer Schicht mit einem adäquaten Brechungsindex ausgestattet werden oder das Hologramm (bzw. die optische Schicht) vollständig aus dem Material mit dem passenden Brechungsindex bestehen. In diesem Zusammenhang ist es von Interesse, daß das Bindemittel hinsichtlich seines Brechungsindexes durch Verwendung von hochbrechenden Nanopartikeln anstelle von SiO₂ Nanopartikeln eingestellt werden kann.

Weiterhin liegt es im Rahmen der Erfindung, daß im Falle von Reliefhologrammen das Strukturieren durch einfaches oder thixotropes Prägen erfolgt.

Eine thixotrop strukturierbares Material ist beispielsweise aus der EP 1 248 685 B1 bekannt.

Die erfindungsgemäße Aufgabe wird in einer alternativen Ausführungsform auch durch ein Verfahren zum Übertragen von Oberflächenstrukturierungen, wie Interferenzschichten, Hologrammen und anderen hochbrechenden optischen Mikrostrukturen auf ein Substrat mit folgenden Verfahrensschritten gelöst:
a) auf einer Trägerfolie wird eine flexible Trägerzwischenschicht als Release-Schicht aufgebracht,
b) auf dieser Trägerzwischenschicht wird ein Prägesol appliziert und mit einer Oberflächenstrukturierung versehen,
c) Herstellen eines Stapels, bestehend aus einer Bindemittelschicht und der Oberflächenstrukturierung, wobei die Bindemittelschicht auf das Substrat appliziert und getrocknet wird und anschließend die Oberflächenstrukturierung auf die Bindemittelschicht übertragen wird,
   wobei das Bindemittel aus einem Nanokomposit besteht, das erhältlich ist durch Oberflächenmodifizierung von
   i) kolloidalen anorganischen Partikeln mit
   ii) einem oder mehreren Silanen der allgemeinen Formel Rₓ-Si-A₄₋ₓ worin die Reste A gleich oder verschieden sind und Hydroxylgruppen oder hydrolytisch abspaltbare Gruppen darstellen, ausgenommen Methoxy, die Reste R gleich oder verschieden sind und hydrolytisch nicht abspaltbare Gruppen darstellen und x den Wert 0, 1, 2 oder 3 hat, wobei bei mindestens 50 Stoffmengen-% der Silane x ≥ 1 ist;
   unter den Bedingungen des Sol-Gel-Prozesses mit einer unterstöchiometrischen Wassermenge, bezogen auf die vorhandenen hydrolysierbaren Gruppen, unter Bildung eines Nanokomposit-Sols, gegebenenfalls weitere Hydrolyse und Kondensation des Nanokomposit-Sols
d) Entfernen der Trägerfolie,
e) thermische Behandlung des Stapels.

Die erfindungsgemäße Aufgabe wird in einer alternativen Ausführungsform auch durch ein Verfahren zum Übertragen von Oberflächenstrukturierungen, wie Interferenzschichten, Hologrammen und anderen hochbrechenden optischen Mikrostrukturen auf ein Substrat mit folgenden Verfahrensschritten gelöst:
a) eine selbsttragende prägbare Folie wird mit einer Oberflächenstrukturierung versehen,
b) Herstellen eines Stapels, bestehend aus einer Bindemittelschicht und der Oberflächenstrukturierung, wobei eine Bindemittelschicht auf das Substrat appliziert und getrocknet wird und anschließend die Oberflächenstrukturierung auf die Bindemittelschicht übertragen wird,
   wobei das Bindemittel aus einem Nanokomposit besteht, das erhältlich ist durch Oberflächenmodifizierung von
   i) kolloidalen anorganischen Partikeln mit
   ii) einem oder mehreren Silanen der allgemeinen Formel Rₓ-Sᵢ-A₄₋ₓ worin die Reste A gleich oder verschieden sind und Hydroxylgruppen oder hydrolytisch abspaltbare Gruppen darstellen, ausgenommen Methoxy, die Reste R gleich oder verschieden sind und hydrolytisch nicht abspaltbare Gruppen darstellen und x den Wert 0, 1, 2 oder 3 hat, wobei bei mindestens 50 Stoffmengen-% der Silane x ≥ 1 ist;
   unter den Bedingungen des Sol-Gel-Prozesses mit einer unterstöchiometrischen Wassermenge, bezogen auf die vorhandenen hydrolysierbaren Gruppen, unter Bildung eines Nanokomposit-Sols, gegebenenfalls weitere Hydrolyse und Kondensation des Nanokomposit-Sols
c) thermische Behandlung des Stapels.

Bei einer bevorzugten Ausführungsform dieser Verfahrens ist vorgesehen, daß in Schritt b) die Übertragung auf ein heißes Substrat erfolgt, wobei die Substrattemperatur von ca. 80°C bis 800°C, bevorzugt von 100°C bis 600°C und besonders bevorzugt von 150°C bis 450°C beträg.

Bei dem erfindungsgemäßen Verfahren ist es zweckmäßig, daß das Substrat eine Glasoberfläche, eine Keramikoberfläche oder eine Metalloberfläche ist.

Ebenso ist es verteilhaft, daß die Trägerfolie eine Polyethylenfolie oder eine Polyimidfolie ist.

Es ist vorteilhaft, daß die Trägerzwischenschicht eine Folie auf polyvinylalkoholbasis ist.

Es liegt auch im Rahmen der Erfindung, daß die selbsttragende prägbare Folie eine Folie auf Polyvinylalkoholbasis ist.

Nachfolgend wird die Erfindung anhand von Zeichnungen und einem Ausführungsbeispiel näher erläutert.

Es zeigen
- Fig. 1: eine schematische Darstellung einer Transferfolie für das erfindungsgemäße Verfahren,
- Fig. 2: eine Hologrammstruktur nach ihrer Fixierung auf einem Substrat.

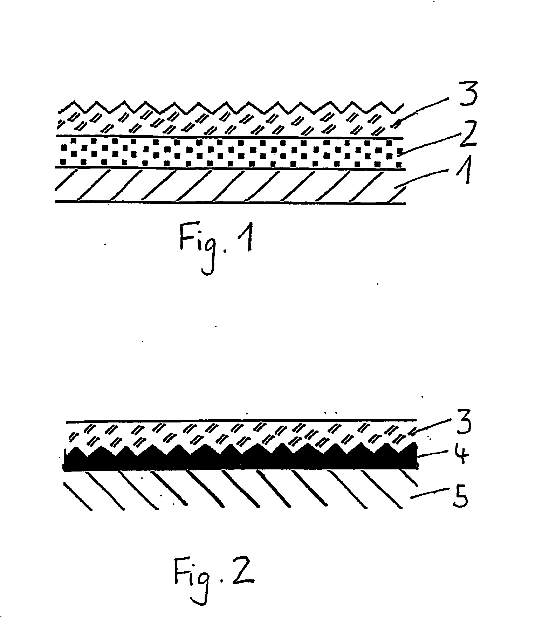

Wie aus Fig. 1 ersichtlich ist, besteht die in dem erfindungsgemäßen Verfahren verwendete Transferfolie aus einer Trägerfolie 1, die beispielsweise eine Polyethylen- oder eine Polyimidfolie sein kann.

Auf diese Trägerfolie 1 wird eine Trägerzwischenschicht 2 (oder Release-Schicht), die insbesondere Polyvinylalkohol (PVA) enthält sowie gegebenenfalls Additive, insbesondere fluorierte Additive (z.B. Zonyl) oder ähnlich wirkende Additive, enthält, mit einer Schichtdicke von ca. 40 µm aufgebracht, auf welcher wiederum eine hochbrechende Schicht 3 aufgebracht ist. Die Trägerzwischenschicht 2 wird verwendet, weil die Adhäsion zwischen der Trägerschicht 1 und der hochbrechenden Schicht 3 zu groß wäre.

In die hochbrechende Schicht 3 wird eine Hologrammstruktur eingebracht.

Mittels des im erfindungsgemäßen Verfahren verwendeten anorganischen Bindemittels 4, wie es aus der WO 98/22648 A2 zum Herstellen eines Verbundwerkstoffs dient, wird die Transferfolie auf ein Substrat 5, welches bevorzugt eine Glas-, Keramik- oder Metalloberfläche aufweist, mit der hochbrechenden Schicht zum Substrat 5 gewandt appliziert. Die Trägerfolie 1 muß mitsamt der Trägerzwischenschicht 2 vor der thermischen Behandlung entfernt werden. Nach Aushärten der Bindemittelschicht 4 erfolgt das Fixieren (Ausbrennen), so daß am Ende auf dem Substrat nur die strukturierte hochbrechende Schicht 3 mittels der Bindemittelschicht 4 anhaftet (Fig. 2)

Dabei bleiben die transferierten Strukturen mit einer Periodizität von ca. 4 µm auf einer Fläche von 1 cm² beim Transferprozeß erhalten, so daß ein nachträglicher Trocknungsprozeß und eine Ofenbehandlung bei Temperaturen von 450°C und in Einzelfällen auch bis 800°C möglich ist.

### Ausführungsbeispiel:

### 1 Herstellung der Sole

### 1.1 Kleber-Sol

Zu vorgelegtem 327,5g Methyltriethoxysilan und 95,5g Tetraethylorthosilicat sind 142g Kieselsol Levasil 300/ 30 und 4 ml einer 37% HCl- Lösung unter Rühren zugegeben. Nach dem Abkühlen der Lösung um ca. 15°C ist eine Mischung aus 327,5g Methyltriethoxysilan und 95,5g Tetraethylorthosilicat der Reaktionslösung beizumengen.

### 1.2 Präge-Sol

Zu 4,46g Titanisopropylat sind 22,43g Isopropanol unter Rühren schnell hinzu zu fügen (Teil 1). Zu 22,43g 1- Butanol sind 0,68g einer 16,9% HCl- Lösung unter Rühren zugegeben (Teil2). Teil 2 ist unter Rühren zu Teil 1 zu geben.

### 1.3 Release-Sol

Zu 36,50 g einer ca. 8 prozentigen Polyvinylalkohol (PVA, Poval 235) in Wasser Lösung sind 4,22 g Isopropanol und eine Mischung bestehend aus 1,083g dest. Wasser mit 0,007g Tween 80 bei zu mischen. Zu einem Aliquot von 38,56g der vorgenannten PVA- Lösung ist eine Mischung aus 0,16g Diethylenglycol, 0,08g Zonyl FS- 300 und 1,09 g zu geben und diese zu durchmischen.

### 2 Herstellung des Schichtenstacks: Realese-, prägbare Schicht und Strukturierung der prägbaren Schicht

### 2.1 Herstellung der Release - Schicht

Das unter Überschrift 1.3 beschriebene Release Sol wird durch einen 400 µm Rakelspalt auf eine PET- Trägerfolie appliziert und bei 150°C für 20 min getrocknet.

### 2.2 Herstellung der prägbaren Beschichtung

Auf der Realese Schicht wird dass unter der Überschrift 1.2 beschriebene Prägesol durch Fluten appliziert.

### 2.3 Strukturierung der prägbaren Schicht

Durch einen Silikonkautschukstempel wird ein Reliefhologramm in den nassen Film gelegt. Mit einer Belastung von ca. 1 kg pro Quadratzentimeter für ca. 1 Sekunde ist der Stempel anzupressen. Nach einer Ruhezeit von 30 Minuten ist das Lösungsmittel in den Silikonkautschuk diffundiert, so dass die so getrocknete Prägeschicht eine ausreichende Festigkeit besitzt und der Silikonkautschuk-Stempel entfernt werden kann.

### 3 Transfer des Hologramms auf ein Substrat

### 3.1 Transfer des Hologramms auf Glas

Das Glassubstrat ist mit dem Kleber durch Dip coaten mit 1mm/s zu beschichten. Nach dem Abdampfen des Lösungsmittels bei RT für ca. 1h kann der unter Überschrift 2 beschriebene strukturierte Schichtenstack auf das Glassubstrat auflaminiert werden. Danach ist das Glassubstrat für 8h bei 80°C, und innerhalb von 4h auf 450°C aufzuheizen. Die Temperatur von 450°C ist für 1h zu halten, sodann das Werkstück binnen 4 h auf 20°C abkühlen.

### 3.2 Transfer des Hologramms auf Keramik

Das Keramiksubstrat ist mit dem Kleber zu beschichten (Dipcoating 1mm/s). Nach dem Abdampfen des Lösungsmittels bei RT für ca. 1 h kann der unter Überschrift 2 beschriebene strukturierte Schichtenstack auf die Keramik auflaminiert werden. Danach ist das Keramiksubstrat für 8h bei 80°C, und innerhalb von 4h auf 450°C aufzuheizen. Die Temperatur von 450°C ist für 1h zu halten, sodann das Werkstück binnen 4 h auf 20°C abkühlen.

### 3.3 Transfer des Hologramms auf Edelstahl

Das Edelstahlsubstrat ist mit dem Kleber zu beschichten (Dipcoating 1mm/s). Nach dem Abdampfen des Lösungsmittels bei RT für ca. 1 h kann der unter Überschrift 2 beschriebene strukturierte Schichtenstack auf den Edelstahl auflaminiert werden. Danach ist das Edelstahlsubstrat für 8h bei 80°C, und innerhalb von 4h auf 450°C aufzuheizen. Die Temperatur von 450°C ist für 1h zu halten, sodann das Werkstück binnen 4 h auf 20°C abkühlen.

## Patentansprüche

1. Verfahren zum Übertragen von Oberfläcbenstrukturierungen, wie Interferenzschichten, Hologrammen und anderen hochbrechenden optischen Mikrostrukturen auf ein Substrat, mit folgenden Verfahrensschritten
a) auf einer Trägerfolie wird eine flexible Trägerzwischenschicht als Release-Schicht aufgebracht,
b) auf dieser Trägerzwischenschicht wird ein Prägesol appliziert und mit einer Oberflächenstrukturierung versehen,
c) Herstellen eines Stapels, bestehend aus einer Bindemittelschicht und der Oberflächenstrukturierung, wobei das Bindemittel direkt auf die Oberflächenstrukturierung appliziert und anschließend dieser Stapel auf das Substrat übertragen wird,
wobei das Bindemittel aus einem Nanokomposit besteht, das erhältlich ist durch Oberflächenmodifizierung von
i) kolloidalen anorganischen Partikeln mit
ii) einem oder mehreren Silanen der allgemeinen Formel Rₓ-Si-A₄₋ₓ worin die Reste A gleich oder verschieden sind und Hydroxylgruppen oder hydrolytisch abspaltbare Gruppen darstellen, ausgenommen Methoxy, die Reste R gleich oder verschieden sind und hydrolytisch nicht abspaltbare Gruppen darstellen und x den Wert 0, 1, 2 oder 3 hat, wobei bei mindestens 50 Stoffmengen-% der Silane x ≥ 1 ist;
unter den Bedingungen des Sol-Gel-Prozesses mit einer unterstöchiometrischen Wassermenge, bezogen auf die vorhandenen hydrolysierbaren Gruppen, unter Bildung eines Nanokomposit-Sols, gegebenenfalls weitere Hydrolyse und Kondensation des Nanokomposit-Sols
d) Entfernen der Trägerfolie,
e) thermische Behandlung des Stapels.

2. Verfahren zum Übertragen von Oberflächenstrukturierungen, wie Interferenzschichten, Hologrammen und anderen hochbrechenden optischen Mikrostrukturen auf ein Substrat, mit folgenden Verfahrensschritten
a) eine selbsttragende prägbaren Folie wird mit einer Oberflächenstrukturierung versehen,
b) Herstellen eines Stapels, bestehend aus einer Bindemittelschicht und der Oberflächenstrukturierung, wobei das Bindemittel direkt auf die Oberflächenstrukturierung appliziert und anschließend dieser Stapel auf das Substrat übertragen wird,
wobei das Bindemittel aus einem Nanokomposit besteht, das erhältlich ist durch Oberflächenmodifizierung von
i) kolloidalen anorganischen Partikeln mit
ii) einem oder mehreren Silanen der allgemeinen Formel Rₓ-Si-A₄₋ₓ worin die Reste A gleich oder verschieden sind und Hydroxylgruppen oder hydrolytisch abspaltbare Gruppen darstellen, ausgenommen Methoxy, die Reste R gleich oder verschieden sind und hydrolytisch nicht abspaltbare Gruppen darstellen und x den Wert 0, 1, 2 oder 3 hat, wobei bei mindestens 50 Stoffmengen-% der Silane x ≥ 1 ist;
unter den Bedingungen des Sol-Gel-Prozesses mit einer unterstöchiometrischen Wassermenge, bezogen auf die vorhandenen hydrolysierbaren Gruppen, unter Bildung eines Nanokomposit-Sols, gegebenenfalls weitere Hydrolyse und Kondensation des Nanokomposit-Sols
c) thermische Behandlung des Stapels.

3. Verfahren gemäß Anspruch 1 oder Anspruch 2, **dadurch gekennzeichnet, daß** im Falle von Reliefhologrammen das Strukturieren durch einfaches oder thixotropes Prägen erfolgt.

4. Verfahren zum Übertragen von Oberflächenstrukturierungen, wie Interferenzschichten, Hologrammen und anderen hochbrechenden optischen Mikrostrukturen auf ein Substrat, mit folgenden Verfahrensschritten
a) auf einer Trägerfolie wird eine flexible Trägerzwischenschicht als Release-Schicht aufgebracht,
b) auf dieser Trägerzwischenschicht wird ein Prägesol appliziert und mit einer Oberflächenstrukturierung versehen,
c) Herstellen eines Stapels, bestehend aus einer Bindemittelschicht und der Oberflächenstrukturierung, wobei die Bindemittelschicht auf das Substrat appliziert und getrocknet wird und anschließend die Oberflächenstrukturierung auf die Bindemittelschicht übertragen wird,
wobei das Bindemittel aus einem Nanokomposit besteht, das erhältlich ist durch Oberflächenmodifizierung von
i) kolloidalen anorganischen Partikeln mit
ii) einem oder mehreren Silanen der allgemeinen Formel Rₓ-Si-A₄₋ₓ worin die Reste A gleich oder verschieden sind und Hydroxylgruppen oder hydrolytisch abspaltbare Gruppen darstellen, ausgenommen Methoxy, die Reste R gleich oder verschieden sind und hydrolytisch nicht abspaltbare Gruppen darstellen und x den Wert 0, 1, 2 oder 3 hat, wobei bei mindestens 50 Stoffmengen-% der Silane x ≥ 1 ist;
unter den Bedingungen des Sol-Gel-Prozesses mit einer unterstöchiometrischen Wassermenge, bezogen auf die vorhandenen hydrolysierbaren Gruppen, unter Bildung eines Nanokomposit-Sols, gegebenenfalls weitere Hydrolyse und Kondensation des Nanokomposit-Sols
d) Entfernen der Trägerfolie,
e) thermische Behandlung des Stapels.

5. Verfahren zum Übertragen von Oberflächenstrukturierungen, wie Interferenzschichten, Hologrammen und anderen hochbrechenden optischen Mikrostrukturen auf ein Substrat mit folgenden Verfahrensschritten
a) eine selbsttragende prägbare Folie wird mit einer Oberflächenstrukturierung versehen,
b) Herstellen eines Stapels, bestehend aus einer Bindemittelschicht und der Oberflächenstrukturierung, wobei eine Bindemittelschicht auf das Substrat appliziert und getrocknet wird und anschließend die Oberflächenstrukturierung auf die Bindemittelschicht übertragen wird,
wobei das Bindemittel aus einem Nanokomposit besteht, das erhältlich ist durch Oberflächenmodifizierung von
i) kolloidalen anorganischen Partikeln mit
ii) einem oder mehreren Silanen der allgemeinen Formel Rₓ-Si-A₄₋ₓ worin die Reste A gleich oder verschieden sind und Hydroxylgruppen oder hydrolytisch abspaltbare Gruppen darstellen, ausgenommen Methoxy, die Reste R gleich oder verschieden sind und hydrolytisch nicht abspaltbare Gruppen darstellen und x den Wert 0, 1, 2 oder 3 hat, wobei bei mindestens 50 Stoffmengen-% der Silane x ≥ 1 ist;
unter den Bedingungen dies Sol-Gel-Prozesses mit einer unterstöchiometrischen Wassermenge, bezogen auf die vorhandenen hydrolysierbaren Gruppen, unter Bildung eines Nanokomposit-Sols, gegebenenfalls weitere Hydrolyse und Kondensation des Nanokomposit-Sols
c) thermische Behandlung des Stapels.

6. Verfahren gemäß Anspruch 1 oder Anspruch 2, **dadurch gekennzeichnet, daß** das Substrat eine Glasoberfläche, eine Keramikoberfläche oder eine Metalloberfläche ist.

7. Verfahren gemäß Anspruch 1, **dadurch gekennzeichnet, daß** die Trägerfolie eine Polyethylenfolie oder eine Polyimidfolie ist.

8. Verfahren gemäß Anspruch 1, **dadurch gekennzeichnet, daß** die Trägerzwischenschicht eine Folie auf Polyvinylalkoholbasis ist.

9. Verfahren gemäß Anspruch 2, **dadurch gekennzeichnet, daß** die selbsttragende prägbare Folie eine Folie auf Polyvinylalkoholbasis ist.

10. Verfahren gemäß Anspruch 1, **dadurch gekennzeichnet, daß** in Schritt e) die thermische Behandlung bei Temperaturen bis 800°C, vorzugsweise bei Temperaturen bis 450°C erfolgt.

11. Verfahren gemäß Anspruch 5, **dadurch gekennzeichnet, daß** in Schritt b) die Übertragung auf ein heißes Substrat erfolgt, wobei die Substrattemperatur von ca. 80°C bis 800°C, bevorzugt von 100°C bis 600°C und besonders bevorzugt von 150°C bis 450°C beträgt.

## Claims

1. Method for transferring surface textures such as interference layers, holograms, and other highly refractive optical microstructures to substrates, comprising the following steps:
a) applying a flexible covercoat as release coating onto a carrier film,
b) applying an embossing sol to this covercoat and giving it a surface texture,
c) making a stack consisting of a layer of bonding agent and the surface texture, the bonding agent being applied directly onto the surface texture, and then transferring this stack onto the substrate,
the bonding agent consisting of a nanocomposite obtained by surface modification of
i) colloidal inorganic particles with
ii) one or several silanes of the general formula Rₓ-Si-A₄₋ₓ,
in which the radicals A are the same or different and represent hydroxyl groups or groups that can be removed hydrolytically, except for methoxy, the radicals R are the same or different and represent groups that cannot be removed hydrolytically and x has the value 0, 1, 2 or 3, with x ≥ 1 in at least 50 mol% of the silanes;
under the conditions of the sol-gel process with a sub-stoichiometric amount of water, based on the hydrolysable groups present, with formation of a nanocomposite sol, and further hydrolysis and condensation of the nanocomposite sol if necessary.
d) removing the carrier film,
e) subjecting the stack to thermal treatment.

2. Method for transferring surface textures such as interference layers, holograms, and other highly refractive optical microstructures to substrates, comprising the following steps:
a) giving a surface texture to a self-supporting film suitable for embossing,
b) making a stack consisting of a layer of bonding agent and the surface texture, the bonding agent being applied directly onto the surface texture, and then transferring this stack onto the substrate,
the bonding agent consisting of a nanocomposite obtained by surface modification of
i) colloidal inorganic particles with
ii) one or several silanes of the general formula Rₓ-Si-A₄₋ₓ,
in which the radicals A are the same or different and represent hydroxyl groups or groups that can be removed hydrolytically, except for methoxy, the radicals R are the same or different and represent groups that cannot be removed hydrolytically and x has the value 0, 1, 2 or 3, with x ≥ 1 in at least 50 mol% of the silanes;
under the conditions of the sol-gel process with a sub-stoichiometric amount of water, based on the hydrolysable groups present, with formation of a nanocomposite sol, and further hydrolysis and condensation of the nanocomposite sol if necessary.
c) subjecting the stack to thermal treatment.

3. Method according to claim 1 or claim 2, **characterised in that**, in the case of relief holograms, texturing is effected via simple or thixotropic embossing.

4. Method for transferring surface textures such as interference layers, holograms, and other highly refractive optical microstructures to substrates, comprising the following steps:
a) applying a flexible covercoat as release coating onto a carrier film,
b) applying an embossing sol to this covercoat and giving it a surface texture,
c) making a stack consisting of a layer of bonding agent and the surface texture, the bonding agent being applied onto the substrate and dried, and the surface texture then being transferred to the layer of bonding agent,
the bonding agent consisting of a nanocomposite obtained by surface modification of
i) colloidal inorganic particles with
ii) one or several silanes of the general formula Rₓ-Si-A₄₋ₓ) in which the radicals A are the same or different and represent hydroxyl groups or groups that can be removed hydrolytically, except for methoxy, the radicals R are the same or different and represent groups that cannot be removed hydrolytically and x has the value 0, 1, 2 or 3, with x ≥ 1 in at least 50 mol% of the silanes;
under the conditions of the sol-gel process with a sub-stoichiometric amount of water, based on the hydrolysable groups present, with formation of a nanocomposite sol, and further hydrolysis and condensation of the nanocomposite sol if necessary.
d) removing the carrier film,
e) subjecting the stack to thermal treatment.

5. Method for transferring surface textures such as interference layers, holograms, and other highly refractive optical microstructures to substrates, comprising the following steps:
a) giving a surface texture to a self-supporting film suitable for embossing,
b) making a stack consisting of a layer of bonding agent and the surface texture, a bonding agent being applied onto the substrate and dried, and the surface texture then being transferred to the layer of bonding agent,
the bonding agent consisting of a nanocomposite obtained by surface modification of
i) colloidal inorganic particles with
ii) one or several silanes of the general formula Rₓ-Si-A₄₋ₓ,
in which the radicals A are the same or different and represent hydroxyl groups or groups that can be removed hydrolytically, except for methoxy, the radicals R are the same or different and represent groups that cannot be removed hydrolytically and x has the value 0, 1, 2 or 3, with x ≥ 1 in at least 50 mol% of the silanes;
under the conditions of the sol-gel process with a sub-stoichiometric amount of water, based on the hydrolysable groups present, with formation of a nanocomposite sol, and further hydrolysis and condensation of the nanocomposite sol if necessary.
c) subjecting the stack to thermal treatment.

6. Method according to claim 1 or claim 2, **characterised in that** the substrate is a glass surface, a ceramic surface or a metal surface.

7. Method according to claim 1, **characterised in that** the carrier film is a polyethylene film or a polyimide film.

8. Method according to claim 1, **characterised in that** the covercoat is a film based on polyvinyl alcohol.

9. Method according to claim 2, **characterised in that** the self-supporting film suitable for embossing is a film based on polyvinyl alcohol.

10. Method according to claim 1, **characterised in that,** in step e), thermal treatment is carried out at temperatures of up to 800°C, preferably at temperatures of up to 450°C.

11. Method according to claim 5, **characterised in that,** in step b), the transfer is onto a hot substrate, the substrate temperature being in the range from approx. 80°C to 800°C, preferably from 100°C to 600°C, with particular preference given to the range from 150°C to 450°C.

## Revendications

1. Procédé pour transférer sur un substrat des structures de surface, telles que des couches d'interférence, des hologrammes et autres microstructures optiques hautement réfractives, avec les étapes de procédé suivantes :
a) application sur un film support d'une couche support intermédiaire flexible en tant que couche antiadhésive,
b) application d'un sol d'embossage sur cette couche intermédiaire et réalisation d'une structure de surface,
c) réalisation d'un empilement composé d'une couche de liant et de la structure de surface, le liant étant appliqué directement sur la structure de surface puis l'empilement étant transféré sur le substrat,
le liant étant composé d'un nanocomposite qui peut être obtenu par modification de surface de
i) particules minérales colloïdales avec
ii) un ou plusieurs silanes de forme générale Rₓ-Si-A₄₋ₓ dans laquelle les restes A sont identiques ou différents et constituent des groupes hydroxyle ou des groupes qui peuvent être dissociés de façon hydrolytique, à l'exception du méthoxy, les restes R sont identiques ou différents et constituent des groupes qui ne peuvent pas être dissociés de façon hydrolytique, et x est la valeur 0, 1, 2 ou 3, dans au moins 50% en poids du silane x ≥ 1 ;
dans des conditions de procédé sol-gel avec une quantité d'eau inférieure à la quantité stoechiométrique, rapportée aux groupes hydrolysables présents, en formant un sol de nanocomposites, le cas échéant d'autre hydrolyse et condensation du sol de nanocomposites,
d) enlèvement de la couche support,
e) traitement thermique de l'empilement,

2. Procédé pour transférer sur un substrat des structures de surface, telles que des couches d'interférence, des hologrammes et autres microstructures optiques hautement réfractives, avec les étapes de procédé suivantes
a) application d'une structure de surface sur un film autoporteur pouvant être embossé,
b) réalisation d'un empilement composé d'une couche de liant et de la structure de surface, le liant étant appliqué directement sur la structure de surface puis l'empilement étant transféré sur le substrat,
le liant étant composé d'un nanocomposite qui peut être obtenu par modification de surface de
i) particules minérales colloïdales avec
ii) un ou plusieurs silanes de forme générale Rₓ-Si-A₄₋ₓ dans laquelle les restes A sont identiques ou différents et constituent des groupes hydroxyle ou des groupes qui peuvent être dissociés de façon hydrolytique, à l'exception du méthoxy, les restes R sont identiques ou différents et constituent des groupes qui ne peuvent pas être dissociés de façon hydrolytique, et x est la valeur 0, 1, 2 ou 3, dans au moins 50% en poids du silane x ≥ 1 ;
dans des conditions de procédé sol-gel avec une quantité d'eau inférieure à la quantité stoechiométrique, rapportée aux groupes hydrolysables présents, en formant un sol de nanocomposites, le cas échéant d'autre hydrolyse et condensation du sol de nanocomposites,
c) traitement thermique de l'empilement.

3. Procédé selon la revendication 1 ou 2, **caractérisé en ce que** dans le cas d'un hologramme en relief, la structuration est réalisée par embossage simple ou thixotrope.

4. Procédé pour transférer sur un substrat des structures de surface, telles que des couches d'interférence, des hologrammes et autres microstructures optiques hautement réfractives, avec les étapes de procédé suivantes :
a) application sur un film support d'une couche support intermédiaire flexible en tant que couche antiadhésive,
b) application d'un sol d'embossage sur cette couche intermédiaire et réalisation d'une structure de surface,
c) réalisation d'un empilement composé d'une couche de liant et de la structure de surface, la couche de liant étant appliquée sur le substrat et séchée, puis la structure de surface étant transféré sur la couche de liant,
le liant étant composé d'un nanocomposite qui peut être obtenu par modification de surface de
i) particules minérales colloïdales avec
ii) un ou plusieurs silanes de forme générale Rₓ-Si-A₄₋ₓ dans laquelle les restes A sont identiques ou différents et constituent des groupes hydroxyle ou des groupes qui peuvent être dissociés de façon hydrolytique, à l'exception du méthoxy, les restes R sont identiques ou différents et constituent des groupes qui ne peuvent pas être dissociés de façon hydrolytique, et x est la valeur 0, 1, 2 ou 3, dans au moins 50% en poids du silane x ≥ 1 ;
dans des conditions de procédé sol-gel avec une quantité d'eau inférieure à la quantité stoechiométrique, rapportée aux groupes hydrolysables présents, en formant un sol de nanocomposites, le cas échéant d'autre hydrolyse et condensation du sol de nanocomposites,
d) enlèvement de la couche support,
e) traitement thermique de l'empilement.

5. Procédé pour transférer sur un substrat des structures de surface, telles que des couches d'interférence, des hologrammes et autres microstructures optiques hautement réfractives, avec les étapes de procédé suivantes :
a) application d'une structure de surface sur un film autoporteur pouvant être embossé,
b) réalisation d'un empilement composé d'une couche de liant et de la structure de surface, une couche de liant étant appliquée sur le substrat et séchée, puis la structure de surface étant transféré sur la couche de lisant,
le liant étant composé d'un nanocomposite qui peut être obtenu par modification de surface de
i) particules minérales colloïdales avec
ii) un ou plusieurs silanes de forme générale Rₓ-Si-A₄₋ₓ dans laquelle les restes A sont identiques ou différents et constituent des groupes hydroxyle ou des groupes qui peuvent être dissociés de façon hydrolytique, à l'exception du méthoxy, les restes R sont identiques ou différents et constituent des groupes qui ne peuvent pas être dissociés de façon hydrolytique, et x est la valeur 0, 1, 2 ou 3, dans au moins 50% en poids du silane x ≥ 1 ;
dans des conditions de procédé sol-gel avec une quantité d'eau inférieure à la quantité stoechiométrique, rapportée aux groupes hydrolysables présents, en formant un sol de nanocomposites, le cas échéant d'autre hydrolyse et condensation du sol de nanocomposites,
c) traitement thermique de l'empilement.

6. Procédé selon la revendication 1 ou 2, **caractérisé en ce que** le substrat est une surface en verre, une surface céramique ou une surface métallique

7. Procédé selon la revendication 1, **caractérisé en ce que** le film support est un film de polyéthylène ou un film de polyimide.

8. Procédé selon la revendication 1, **caractérisé en ce que** la couche support intermédiaire est un film à base d'alcool polyvinylique.

9. Procédé selon la revendication 2, **caractérisé en ce que** le film autoporteur pouvant être imprimé est un film à base d'alcool polyvinylique.

10. Procédé selon la revendication 1, **caractérisé en ce qu**'à l'étape e), le traitement thermique est réalisé à des températures allant jusqu'à 800 °C, de préférence des températures allant jusqu'à 450 °C.

11. Procédé selon la revendication 5, **caractérisé en ce qu**'à l'étape b), le transfert se fait sur un substrat chaud, la température du substrat est comprise entre environ 80 °C et 800 °C, de préférence entre 100 °C et 600 °C, et de façon privilégiée entre 150 °C et 450 °C.
